# EUROPEAN PATENT APPLICATION

(11) **EP 3 581 321 A1**
(43) Date of publication of application: **18.12.2019**
(21) Application number: 17826117.8
(22) Date of filing: 02.08.2017
(51) Int. Cl.: B23K 26/046

(54) **LASER PROCESSING DEVICE AND LASER PROCESSING METHOD**

(30) Priority: 07.02.2017 CN 201710067988
(71) Applicant: BOE Technology Group Co., Ltd., Beijing 100015 (CN); Hefei Xinsheng Optoelectronics Technology Co., Ltd., Xinzhan Industrial Park Hefei Anhui 230012 (CN)
(72) Inventor: XU, Lulu, Beijing 100176 (CN); ZHU, Wenlong, Beijing 100176 (CN); XU, Qingyang, Beijing 100176 (CN)
(74) Representative: Klunker IP Patentanwälte PartG mbB
(86) International application number: PCT/CN2017/095602
(87) International publication number: WO 2018/145428

(57) **Abstract**

A laser processing device and a laser processing method. The laser processing device includes a cutting table (10), configured to load a workpiece (15) to be processed; a distance-measuring unit (12), configured to perform distance measurement on the workpiece (15) along a predetermined processing path (11) to obtain three-dimensional processing data (16) of the workpiece (15); and a laser processing unit (13), configured to process the workpiece (15) by using laser light (130) according to the three-dimensional processing data (16). In a process of laser processing, the laser processing device can adjust a focus position of the laser light (130) on the workpiece (15) in real time according to the three-dimensional processing data (16), and ensure that the laser light (130) is precisely focused on the surface of the workpiece (15), so that processing quality of the laser processing is improved, adaptability to a deformation degree of the workpiece (15) is enhanced, a rejection rate is reduced, and product yield is improved.

## Description

The present application claims priority to Chinese patent application No. 201710067988.7, filed February 07, 2017, the entire disclosure of which is incorporated herein by reference as part of the present application.

### TECHNICAL FIELD

Embodiments of the present disclosure relate to a laser processing device and a laser processing method.

### BACKGROUND

Laser processing is non-contact processing, and is a processing method which mainly uses the energy of a laser beam to reach a high energy density in a focus point after being focused by a lens, and which relies on a photo-thermal effect for processing. The laser processing may comprise photo-chemical reaction processing and laser thermal processing. The photo-chemical reaction processing is referred to as a process that the photo-chemical reaction is triggered or controlled by high-density high-energy laser photons when a laser beam is irradiated onto an object, and the photo-chemical reaction processing comprises photo-chemical deposition, laser engraving and etching and so on. The laser thermal processing is a process implemented by thermal effect that is generated by projecting a laser beam onto a surface of a material, and the laser thermal processing comprises laser welding, laser cutting, laser scribing and so on. The laser cutting is one of thermal cutting methods, uses invisible beams to replace a conventional mechanical knife, and uses a non-contact cutting approach, so that a surface of a workpiece is not scratched during a cutting process. The laser cutting also has the advantages of having a smooth and burr-free cutting surface, a fast cutting speed, high cutting precision, high cutting quality and low processing cost, etc. Therefore, the laser cutting technology is widely used in a cutting process of various materials, such as plexiglass, wood, plastic and other non-metallic materials, and stainless steel, carbon steel, alloy steel, aluminum and other metal materials.

### SUMMARY

Laser processing processes a workpiece by using an energy-focus laser beam, and a requirement on distance accuracy between the laser beam and the workpiece is relatively high. In the laser processing process, an ideal focus position is usually set, and the workpiece is processed according to the ideal focus position. However, if the processed workpiece itself has serious warpage, the flatness of the cutting table is abnormal, abnormal substances such as waste bars left on the cutting table are not removed timely during the processing process so as to cause the processed workpiece to be padded, and other reasons, which lead to the surface of the processed workpiece is deformed, exist, then an actual focus position of the laser light on the workpiece deviates from the ideal focus position. Accuracy of laser processing is affected, which leads to the reduction of the cutting quality of the laser processing technology and the increase of the rejection rate of the laser processing technology in the actual production.

At least one embodiment of the present disclosure provides a laser processing device and a laser processing method. The laser processing device and the laser processing method according to at least one embodiment, before the laser processing, distances of the workpiece at all positions on a predetermined processing path can be measured to obtain three-dimensional processing data of the workpiece. In the laser processing process, a focus position of the laser light on the workpiece can be adjusted in real time according to the three-dimensional processing data, so as to ensure that the laser light is precisely focused on the surface of the workpiece, processing quality of the laser processing is improved, adaptability to the deformation degree of the workpiece is enhanced, a rejection rate is reduced, and product yield is improved.

At least one embodiment of the present disclosure provides a laser processing device, which may comprise: a cutting table, configured to load a workpiece to he processed; a distance-measuring unit, configured to perform distance measurement on the workpiece along a predetermined processing path to obtain three-dimensional processing data of the workpiece; and a laser processing unit, configured to process the workpiece according to the three-dimensional processing data.

For example, in the laser processing device provided by an embodiment of the present disclosure, the distance-measuring unit may comprise: a signal transmitter, configured to transmit a first distance-measuring signal to the workpiece; a signal receiver, configured to receive a second distance-measuring signal, the second distance-measuring signal being a signal returned to the signal receiver after the first distance-measuring signal is reflected by the workpiece; and a data processer, configured to process the first distance-measuring signal and the second distance-measuring signal to obtain the three-dimensional processing data of the workpiece.

For example, in the laser processing device provided by an embodiment of the present disclosure, the first distance-measuring signal is a laser signal or an ultrasonic signal.

For example, the laser processing device provided by an embodiment of the present disclosure further comprises a memory. The memory is configured to receive and save the three-dimensional processing data from the distance-measuring unit, and the three-dimensional processing data may be provided to the laser processing unit.

For example, in the laser processing device provided by an embodiment of the present disclosure, the laser processing unit may comprise: a laser emitter, an optical assembly and a laser processing head. The laser emitter is configured to emit laser light; the optical assembly is configured to converge the laser and provide the laser to the laser processing head; and the laser processing head is configured to process the workpiece based on the three-dimensional processing data.

For example, in the laser processing device provided by an embodiment of the present disclosure, the laser processing unit may further comprise a first moving member, configured to drive the laser processing head to move within a surface of the cutting table; and a second moving member, configured to drive the laser processing head to move in a direction perpendicular to the surface of the cutting table.

For example, in the laser processing device provided by an embodiment of the present disclosure, the laser processing head is configured to cut or split the workpiece.

For example, the laser processing device provided by an embodiment of the present disclosure may further comprise compensation device. The compensation device is configured to generate a compensation signal between the laser processing unit and the distance-measuring unit and to correct the three-dimensional processing data with the compensation signal.

At least one embodiment of the present disclosure further provides a laser processing method, which comprises: placing a workpiece to be processed on a cutting table; performing distance measurement on the workpiece along a predetermined processing path to form three-dimensional processing data of the workpiece; and processing the workpiece by using laser light according to the three-dimensional processing data.

For example, in the laser processing method provided by an embodiment of the present disclosure, the forming the three-dimensional processing data of the workpiece may comprise: transmitting a first distance-measuring signal to the workpiece through a signal transmitter; receiving a second distance-measuring signal through a signal receiver, the second distance-measuring signal being a signal after the first distance-measuring signal is reflected by the workpiece; and processing the first distance-measuring signal and the second distance-measuring signal by a data processer to obtain the three-dimensional processing data of the workpiece.

For example, in the laser processing method provided by an embodiment of the present disclosure, a processing method of the data processer comprises a phase method, a spectral confocal method, a trigonometric method or an interference method.

For example, in the laser processing method provided by an embodiment of the present disclosure, the processing the workpiece by using the laser light may comprise using the laser light to cut or split the workpiece so as to process the workpiece.

For example, in the laser processing method provided by an embodiment of the present disclosure, the processing the workpiece by using the laser light according to the three-dimensional processing data may comprise: emitting the laser light by a laser emitter; adjusting a focus position of the laser light on the workpiece according to the three-dimensional processing data; and using the laser light to cut or split the workpiece.

For example, the laser processing method provided by an embodiment of the present disclosure may further comprise: generating a compensation signal; and correcting the three-dimensional processing data by using the compensation signal.

### BRIEF DESCRIPTION OF THE DRAWINGS

In order to clearly illustrate the technical solutions of the embodiments of the disclosure, the drawings of the embodiments will be briefly described in the following; it is obvious that the described drawings are only related to some embodiments of the disclosure and thus are not limitative to the disclosure.
FIG. 1 is a schematic diagram of a laser cutting device;
FIG. 2a is a schematic diagram of a laser processing device provided by an embodiment of the present disclosure;
FIG. 2b is a schematic block diagram of a laser processing device provided by an embodiment of the present disclosure;
FIG. 3a is a schematic diagram of measuring a distance by a distance-measuring unit provided by an embodiment of the present disclosure;
FIG. 3b is a schematic block diagram of a distance-measuring unit provided by an embodiment of the present disclosure;
FIG. 3c is a schematic diagram of three-dimensional processing data provided by an embodiment of the present disclosure;
FIG. 4a is a schematic diagram of processing by a laser processing unit provided by an embodiment of the present disclosure;
FIG. 4b is a schematic structural diagram of a laser processing unit provided by an embodiment of the present disclosure;
FIG. 4c is a schematic block diagram of a laser processing unit provided by an embodiment of the present disclosure;
FIG. 5 is a schematic flow chart of a laser processing method provided by an embodiment of the present disclosure;
FIG. 6a is a schematic flow chart of a step S2 in FIG. 5;
FIG. 6b is a schematic flow chart of a step S23 in FIG. 6a; and
FIG. 7 is a schematic flow chart of a step S3 in FIG. 5.

### DETAILED DESCRIPTION

In order to make objectives, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. The terms "comprise," "include," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right,"' "left" and the like are only used to indicate relative position relationship, and when the position of the object which is described is changed, the relative position relationship may be changed accordingly.

Laser processing processes a workpiece by using a focused high-power density laser beam, and therefore a requirement on focusing accuracy of the laser beam on the workpiece is relatively high. However, in an actual laser processing production process, a surface of the workpiece may not be absolutely flat, and the surface of the workpiece may be deformed in a certain extent, such as warping, bending or tilting. In addition, for a workpiece with a relatively large area such as a length of the workpiece being within a range of 1200mm, the workpiece may have 510 mm or even 20 mm deformation, leading to an actual focus position of laser light on the workpiece to deviate from an ideal focus position. Thus, accuracy and quality of the laser processing is decreased, and a rejection rate of the laser processing is increased.

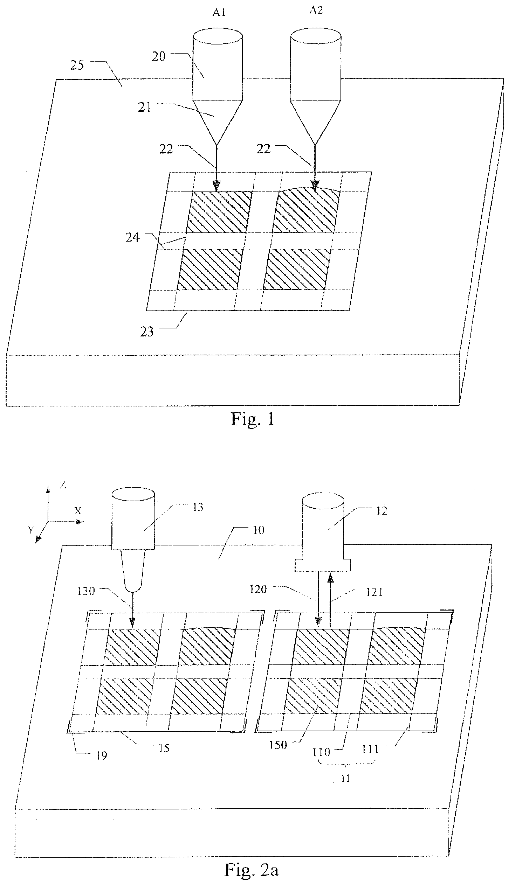

For example, FIG. 1 shows a schematic diagram of a laser cutting device. As shown in FIG.1, the laser cutting device comprises a cutting table 25, a laser emitter 20, a laser cutting head 21, a glass substrate 23 and a driver (not shown in FIG. 1). The glass substrate 23 is provided with a predetermined cutting path 24, and laser light 22 emitted by the laser emitter 20 is focused and converges through a lens and then is incident on the glass substrate 23 through the laser cutting head 21. The driver drives the laser cutting head 21 to move along the predetermined cutting path 24, so that the laser light 22 cuts the glass substrate 23 along the predetermined cutting path 24. Before the cutting processing, a focus position of the laser light 22 in an ideal state is usually set; for example, at a position A1, the focus position of the laser light 22 is just on the surface of the glass substrate 23. During the cutting processing, when the laser emitter 20 is moved from the position A1 to a position A2, because the surface of the glass substrate 23 is not even, the surface of the cutting table 25 is not flat, or abnormal substances are present on the cutting table 25, etc., the surface of the glass substrate 23 at the position A2 is warped or deformed, and the focus position of the laser light 22 at the position A2 can not be exactly on the surface of the glass substrate 23, so that a cutting gap of the glass substrate 23 is relatively wider at the position A2. Eventually, widths of the cutting gaps of the glass substrate 23 are different, the cutting quality and accuracy is reduced, and even waste products are generated.

At least one embodiment of the present disclosure provides a laser processing device, which comprises: a cutting table, a distance-measuring unit and a laser processing unit. The cutting table is configured to load a workpiece to be processed, the distance-measuring unit is configured to perform distance measurement on the workpiece on a predetermined processing path to obtain three-dimensional processing data of the workpiece, and the laser processing unit is configured to process the workpiece according to the three-dimensional processing data.

At least one embodiment of the present disclosure further provides a laser processing method, which comprises: placing a workpiece to be processed on a cutting table; perform distance measurement on the workpiece on a predetermined processing path to form three-dimensional processing data of the workpiece; and processing the workpiece by using laser light according to the three-dimensional processing data.

At least one embodiment of the present disclosure provides a laser processing device and a laser processing method. Before the laser processing, distances of the workpiece in all positions on a predetermined processing path can be measured, and the three-dimensional processing data of the workpiece can be obtained according to distance-measuring results in conjunction with information of the predetermined processing path. In the process of the laser processing, a focus position of the laser light on the workpiece can be adjusted in real-time according to the three-dimensional processing data, so as to ensure that the laser light is precisely focused on the surface of the workpiece. The processing quality of the laser processing is improved, the adaptability to the deformation degree of the workpiece is enhanced, the rejection rate is reduced, and the product yield is improved.

The present disclosure is further illustrated by some embodiments below.

### First embodiment

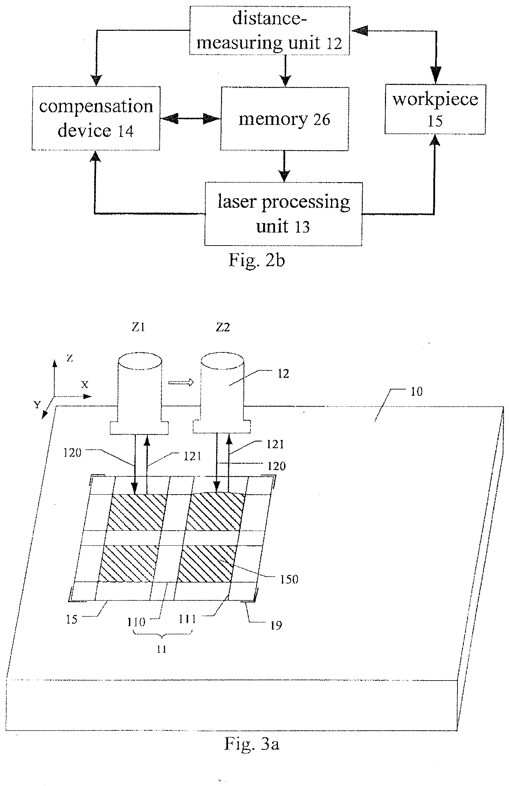

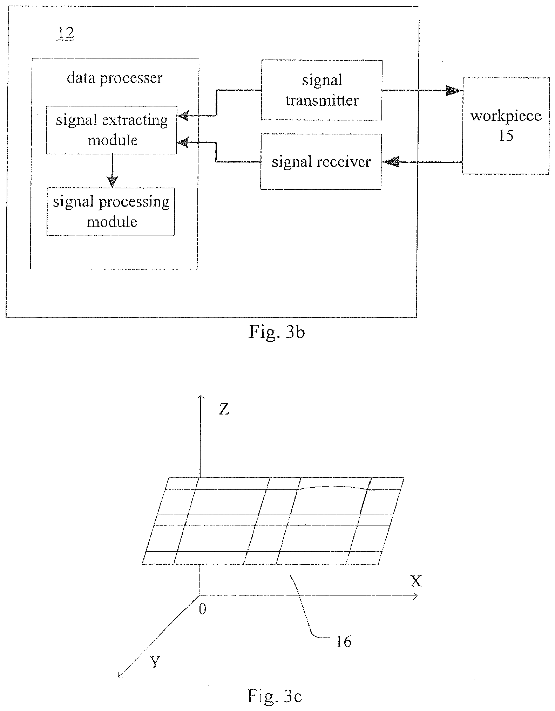

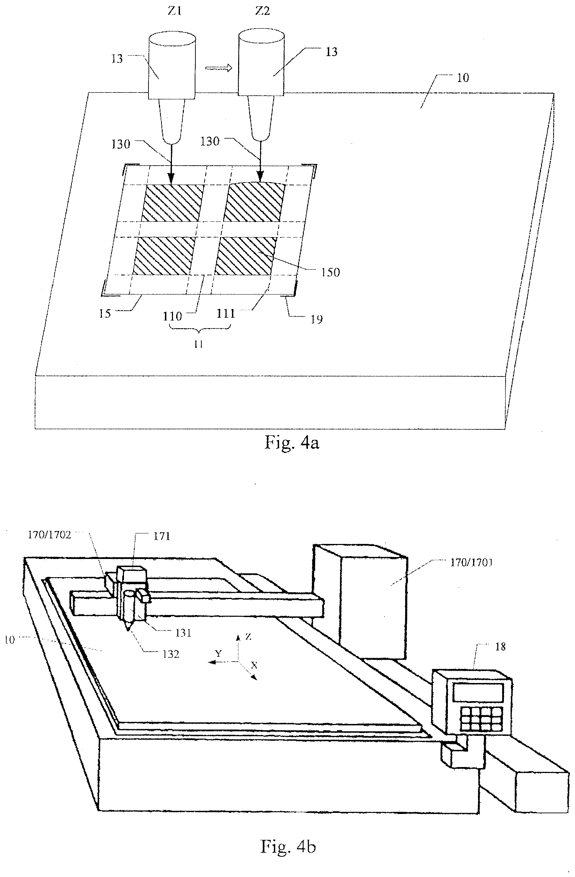

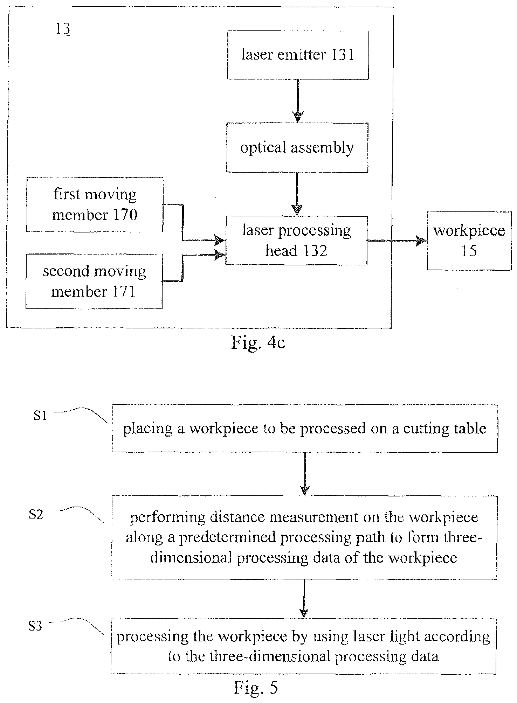

FIG. 2a is a schematic diagram of a laser processing device provided by an embodiment of the present disclosure; FIG. 2b is a schematic block diagram of a laser processing device provided by an embodiment of the present disclosure; FIG. 3a is a schematic diagram of measuring a distance by a distance-measuring unit provided by an embodiment of the present disclosure; FIG. 3b is a schematic block diagram of a distance-measuring unit provided by an embodiment of the present disclosure; FIG. 3c is a schematic diagram of three-dimensional processing data provided by an embodiment of the present disclosure; FIG. 4a is a schematic diagram of processing by a laser processing unit provided by an embodiment of the present disclosure; FIG. 4b is a schematic structural diagram of a laser processing unit provided by an embodiment of the present disclosure; and FIG. 4c is a schematic block diagram of a laser processing unit provided by an embodiment of the present disclosure. Figs. 2a-4c only show a part of the relevant structures in order to more clearly illustrate the embodiments of the present disclosure.

For example, as shown in FIG. 2a, a laser processing device provided by an embodiment of the present disclosure comprises: a cutting table 10, a distance-measuring unit 12 and a laser processing unit 13. The cutting table 10 is configured to load a workpiece 15 to be processed, and the workpiece 15 is provided with a predetermined processing path 11 in an X-axis direction and a Y-axis direction. The distance-measuring unit 12 is configured to perform distance measurement on the workpiece 15 in a Z-axis direction along the predetermined processing path 11 and obtain three-dimensional processing data 16 (as shown in FIG. 3c) of the workpiece 15 according to results of the distance measurement in conjunction with the information of the predetermined processing path 11 (as shown in FIG. 3c). The laser processing unit 13 is configured to process the workpiece 15 with laser light 130 according to the three-dimensional processing data 16. The three-dimensional processing data 16 may comprise at least position coordinate information on X, Y and Z axes in a virtual coordinate system, and the origin of the virtual coordinate system may be selected as needed.

For example, a distance of the workpiece 15 in the Z-axis direction may represent a distance between a surface of the workpiece 15 and the distance-measuring unit 12 in the Z-axis direction.

For example, the laser processing device performs distance measurement on the workpiece 15 at all positions on the predetermined processing path 11 by the distance-measuring unit 12 to obtain the three-dimensional processing data 16 of the workpiece 11. The focus position of the laser light 130 on the workpiece 15 is dynamically adjusted in real-time based on the three-dimensional processing data 16, so as to ensure that the laser light 130 is precisely focused on the surface of the workpiece 15. The processing quality of the laser processing is improved, the adaptability to the deformation degree of the workpiece is enhanced, the rejection rate is reduced, and the product yield is improved. In the laser processing device, the distance-measuring unit 12 and the laser processing unit 13 may be provided integrally or separately. In a case that the distance-measuring unit 12 and the laser processing unit 13 are provided separately, the distance-measuring unit 12 and the laser processing unit 13 can operate in the same area or different areas at the same time, so that the working efficiency of the laser processing can be improved. On the other hand, the three-dimensional processing data 16 is obtained by measuring distances firstly, and then the focus position of the laser light 130 is dynamically adjusted in real-time according to the three-dimensional processing data 16, the time for processing the three-dimensional processing data 16 can be saved during the laser processing, so as to improve the speed of the laser processing.

For example, the workpiece 15 to be processed may be a metal panel or a non-metal panel. The non-metal panel, for example, may be a glass panel, a quartz panel, a ceramic panel, a plastic panel or a silicone panel. The non-metal panel, for another example, may be a panel formed with functional components such as a liquid crystal display panel, an OLED display panel and the like. The metal panel, for example, may be an electro-galvanized steel sheet, a hot-dip galvanized steel sheet, an aluminized zinc steel sheet, a copper plate or the like.

For example, the predetermined processing path 11 may comprise a first group of processing paths 110 extending in the X-axis direction and a second group of processing paths 111 extending in the Y-axis direction. The first group of processing paths 110, for example, may be straight lines parallel to each other, and the second group of processing paths 111, for example, may be straight lines parallel to each other. The first group of processing paths 110 and the second group of processing paths 111 may also be curved lines, such as wavy lines or parabolas, etc., so as to accommodate the processing of the workpiece 15 with different shapes. A specific shape of the predetermined processing path 11 can be flexibly designed according to the shape of the workpiece 15, which is not limited by the embodiments of the present disclosure.

As shown in FIG. 2b, the laser processing device also may comprise a memory 26. The memory 26 is configured to receive and save the three-dimensional processing data 16 from the distance-measuring unit 12, and provide the three-dimensional processing data 16 to the laser processing unit 13. The memory 26 is further configured to store information of the predetermined processing path 11 and provide the information of the predetermined processing path 11 to the distance-measuring unit 12.

For example, the memory 26 may be various types of storage media, such as a volatile memory or a non-volatile memory, a magnetic memory or a semiconductor memory. More specifically, the memory 26 may comprise a memory card of a mobile phone, a storage component of a tablet computer, a hard disk of a personal computer, a magnetic disk, a compact disc, a random access memory (RAM), a read only memory (ROM), an erasable programmable read-only memory (EPROM), a static random access memory (SRAM), a portable compact disc read-only memory (CD-ROM), a USB memory or any combination of the above storage media.

For example, as shown in FIG. 2b, the laser processing device may further comprise compensation device 14. The compensation device 14 may comprise components such as a position detector, a comparator and a signal processer. The position detector may be, for example, a photoelectric position detector. The position detector is configured to detect first position information of the laser processing unit 13 at a processing initial position and second position information of the distance-measuring unit 12 at the processing initial position. The comparator is configured to compare the first position information with the second position information and generate a compensation signal (data) according to a difference between the first position information and the second position information. The signal processer is configured to correct the three-dimensional processing data 16 by using the compensation signal, and the corrected three-dimensional processing data 16 may be transmitted to the memory 26 for storage, and finally may be provided to the laser processing unit 13 for subsequent processing. Alternatively, the compensation signal may be provided to the laser processing unit 13 during operation for compensating in real-time. For example, the first position information may comprise distance information between the laser processing unit 13 and the workpiece 15 in the Z-axis direction, and the second position information may comprise distance information between the distance-measuring unit 12 and workpiece 15 in the Z-axis direction. For another example, the first position information may further comprise coordinate information of the laser processing unit 13 in the X-axis direction and the Y-axis direction, and the second position information may further comprise coordinate information of the distance-measuring unit 12 in the X-axis direction and the Y-axis direction.

For example, the cutting table 10 may also be provided with a position-confining member 19. The position-confining member 19 is configured to fix the workpiece 15, so as to prevent movement of the workpiece 15 on the cutting table 10 during laser processing. For example, a material of the position-confining member 19 may be rubber or other flexible materials, so as to prevent the workpiece 15 from being scratched during the process of fixing the workpiece 15.

For example, the laser processing device may further comprise a mechanical arm. The mechanical arm is configured to move the workpiece 15 onto the surface of the cutting table 10 and remove a sub-workpiece 150 after being processed. A material of the mechanical arm, for example, may comprise aluminum alloy and/or Teflon, but is not limited thereto. The material of the mechanical arm may also be other materials, such as ceramics or the like.

For example, as shown in FIG. 3a and FIG. 3b, the distance-measuring unit 12 may include a signal transmitter, a signal receiver and a data processer. The distance-measuring unit 12 receives the information of the predetermined processing path 11 provided by the memory 26. As moving along the predetermined processing path 11, the signal transmitter transmits a first distance-measuring signal 120 to the surface of the workpiece 15, and the signal receiver receives a second distance-measuring signal 121. For example, the second distance-measuring signal 121 is a signal returned to the signal receiver after the first distance-measuring signal is reflected by the workpiece 15. The data processer processes the first distance-measuring signal 120 and the second distance-measuring signal 121, and obtains the three-dimensional processing data of the workpiece 15 according to the processing result in combination with the information of the predetermined processing path 11.

For example, the signal transmitter may be a laser emitter or an ultrasonic generator, and the signal receiver can be a laser receiver or an ultrasonic receiver correspondingly. The laser emitter, for example, may be an excimer laser emitter, a semiconductor laser emitter, a solid-state laser emitter or a gas laser emitter.

For example, the first distance-measuring signal 120 may be a laser signal, an ultrasonic signal, or the like, and accordingly, the second distance-measuring signal 121 may also be a laser signal, an ultrasonic signal, or the like.

It should be noted that distance-measuring accuracy of the distance-measuring unit 12 needs to be controlled within 0.05 mm, so as to ensure that slight deformation of the surface of the workpiece 15 can be accurately measured.

For example, the data processer may comprise a signal extracting module and a signal processing module. For example, in a case that the first distance-measuring signal 120 and the second distance-measuring signal 121 are laser signals, the signal extracting module may extract characteristic information of the laser signals, and the characteristic information may comprise, for example, one or more of phase information, wavelength information, an amplitude ratio of each pulse peak, light spot information, oscillation frequency information, and the like. For example, the signal extracting module may extract light-wave amplitude information of the first distance-measuring signal 120 and light-wave amplitude information of the second distance-measuring signal 121, and then superimpose the light-wave amplitude information of the first distance-measuring signal 120 and the light-wave amplitude information of the second distance-measuring signal 121, so that interference fringes of lightness and darkness are obtained. Then the signal extracting module may convert the optical signals into electric-pulse signals. The electric-pulse signals are counted by a counter to obtain a total number of electric pulses, so that the distance information between the workpiece 15 and the signal transmitter and the signal receiver in the Z-axis direction can be obtained. For another example, the signal extracting module may further record a transmitting time when the signal transmitter transmits the first distance-measuring signal 120 and a receiving time when the signal receiver receives the second distance-measuring signal 121, and calculate the distance information between the workpiece 15 and the signal transmitter and the signal receiver in the Z-axis direction according to the difference between the transmitting time and the receiving time.

For example, the signal processing module may process the first distance-measuring signal 120 and the second distance-measuring signal 121 by using one or more methods selected from the group including a phase method, a spectral con-focal method, a trigonometric method, an interference method, or the like, so as to obtain the distance information of the workpiece 15 in the Z-axis direction.

For example, the data processer may be a specialized computer device (such as, a digital signal processor (DSP), a single chip microcontroller, a programmable logic controller (PLC), etc.), or a general computer device (such as, a central processing unit (CPU)), which is not limited in the embodiments of the present disclosure.

For example, as shown in FIG. 3a, on the surface of the cutting table 10, the distance-measuring unit 12 moves along the predetermined processing path 11 on the workpiece 15. At a position Z1, the distance-measuring unit 12 measures and obtains first distance information of the workpiece 15; at a position Z2, the distance-measuring unit 12 measures and obtains second distance information of the workpiece 15. For example, at the position Z2, the workpiece 15 is deformed, resulting in a distance difference between the first distance information and the second distance information. For example, at the position Z2, when the workpiece 15 has convex deformation, the second distance information is smaller than the first distance information; when the wirkpiece 15 has concave deformation, the second distance information is larger than the first distance information. As shown in FIG. 3c, at each position on the predetermined processing path 11, the distance-measuring unit 12 measures a distance of the workpiece 15 in the Z-axis direction, and the three-dimensional processing data 16 of the workpiece 15 can be obtained according to the distance-measuring results in conjunction with information of the predetermined processing path 11. For example, the Z-axis coordinates of the three-dimensional processing data 16 may be referred to as the distances between the workpiece 15 and the distance-measuring unit 12, and the X-axis coordinates and the Y-axis coordinates of the three-dimensional processing data 16 may be referred to as the information of the predetermined processing path 11.

It should be noted that the workpiece 15 may have deformation such as convex deformation, concave deformation, tilting deformation or the like. A reason causing deformation of the workpiece 15 may comprise a self-reason due to the workpiece 15 itself or an external reason. The self-reason, for example, comprises warping of the workpiece 15, defect of the workpiece 15 itself, and the like. The external reason, for example, comprises non-flatness of the surface of the cutting table 10 itself, presence of abnormal substances on the surface of the cutting table 10 which causes the workpiece 15 to be padded, and the like. The laser processing device can detect the deformation of the workpiece 15 caused by the self-reason and/or the external reason, so as to not only enhance the adaptability to the deformation degree of the workpiece 15, but also lower a requirement on installation accuracy and flatness and reduce replacement frequency of the cutting table 10.

For example, as shown in Figs. 4a-4c, the laser processing unit 13 may comprise a laser emitter 131, an optical assemblyassembly (not shown) and a laser processing head 132. The laser emitter 131 is configured to emit laser light toward the surface of the workpiece 15; the optical assembly is configured to converge the laser light and provide the laser light to the laser processing head 132; and the laser processing head 132 is configured to process the workpiece 15 by using the laser light according to the three-dimensional processing data 16. For example, the laser processing unit 13 may perform cutting processing or splitting processing or the like on the workpiece 15. When the laser processing unit 13 performs the cutting processing on the workpiece 15, a wavelength of the laser light 130 may be, for example, 1064 nm; when the laser processing unit 13 performs the splitting processing on the workpiece 15, the wavelength of the laser light 130 may be, for example, 10.6 µm. For another example, during the cutting processing, if the workpiece 15 is aluminosilicate glass, the power of the laser light 130 may be, for example, 16-22 Watt; if the workpiece 15 is soda lime glass, the power of the laser light 130 may be, for example, 30-50 Watt. During the splitting processing, if the workpiece 15 is the soda lime glass, the power of the laser light 130 may be, for example, 90-120 Watt.

For example, a speed of the cutting processing and the splitting processing performed by the laser processing unit 13 can be 10-30 m/min. For example, in a process of the cutting processing, a cutting speed of the laser processing unit 13 is 15 m/min to ensure that laser light 130has sufficient time to work on the workpiece 15, so that the workpiece 15 is heated to vaporize and is evaporated to form cavities. As the laser processing unit 13 moves along the predetermined processing path 11, continuous cavities can form a cutting gap with a narrow width, so as to achieve the cutting processing of the workpiece 15.

It should be noted that if the workpiece 15 is high-strength glass, internal stress of the workpiece 15 is large. After performing the cutting processing on the workpiece 15, the worrkpiece 15 is automatically separated to form a plurality of sub-workpieces 150. If the workpiece 15 is low-strength glass, the internal stress of the workpiece 15 is small, so that the worrkpiece 15 can not be automatically separated into a plurality of sub-workpieces 150 alter performing the cutting processing on the workpiece 15. For example, when the workpiece 15 is low-strength glass, a splitting process may be added in the process to perform the splitting processing on the workpiece 15, so that the workpiece 15 is automatically separated to form a plurality of sub-workpieces 150. For another example, when the workpiece 15 is low-strength glass, the workpiece 15 may also be manually separated to obtain a plurality of sub-workpieces 150 after removing the workpiece 15 from the cutting table 10.

For example, the optical assembly may be a lens group and/or a reflector group. The optical assembly may converge the laser light 130 to form a laser beam having a high power density. The optical assembly may also change a propagation path of the laser light 130, so that the laser light 130 can be accurately incident into the laser processing head 132. For example, the lens group may comprise a convex lens, but is not limited thereto. The lens group may also comprise a concave lens, a convex lens, a combination of the concave lens and the convex lens, and the like. The number and the position relationship of the concave lens and the convex lens can be designed according to actual application needs, provided that the lens group can converge the laser light 130 and provide the laser light 130 to the laser processing head 132.

For example, the laser processing unit 13 further comprises a first moving member 170 and a second moving member 171. The first moving member 170 is configured to drive the laser processing head 132 to move along the predetermined processing path 11 within the surface of the cutting table 10. As shown in FIG. 4b, the first moving member 170 comprises a first part 1701 for driving the laser processing head 132 to move along the X-axis direction and a second part 1702 for driving the laser processing head 132 to move along the Y-axis direction, so that the first moving member 170 can drive the laser processing head 132 to move in a two-dimensional plane defined by the X-axis and the Y-axis. The second moving member 171 is configured to drive the laser processing head 132 to move along a direction perpendicular to the surface of the cutting table 10. In the Z-axis direction, the second moving member 171 can adjust the distance between the laser processing head 132 and the workpiece 15 according to the three-dimensional processing data 16, so as to adjust the focus position of the laser light 130 on the workpiece 15 in real-time and ensure that the laser processing head 132 and the workpiece 15 are always precisely focused. The adaptability of the laser processing device to the deformation degree of the workpiece 15 can be enhanced, the processing quality of the workpiece 15 is improved, the processing accuracy of the workpiece 15 is improved, the rejection rate is reduced, and the product yield is improved.

For example, the first moving member 170 and the second moving member 171 may be one or a combination of a pneumatic power member, a hydraulic power member, a motor or a manual power member. The first moving member 170 and the second moving member 171, for example, may comprise a stepping motor or a servo motor to achieve accurate control, and the moving accuracy can reach 0.01 mm.

For example, the laser emitter 131 may be a gas laser (such as a carbon dioxide laser), a solid laser (such as an yttrium aluminum garnet laser or a ruby laser), a semiconductor laser (such as a double-heterojunction laser or a large optic cavity laser), a fiber laser (such as a crystal fiber laser) or an excimer laser (such as an inert gas excimer laser, a mercury halide excimer laser or a polyatomic excimer laser), or the like.

For example, as shown in FIG. 4b, the laser processing device may further comprise a controller 18. The controller 18 is used to control overall operations of the laser processing device. For example, the controller 18 may control the first moving member 170 and the second moving member 171 to drive the laser processing unit 13 to move, and may also control the distance-measuring unit 12 to move along the predetermined processing path 11. The controller 18 may further control the signal transmitter to transmit the first distance-measuring signal 120, control the signal receiver to receive the second distance-measuring signal 121 and control the laser emitter 131 to emit the laser light 130. The controller, for example, may be a general computer device (such as, a central processing unit (CPU)), a single chip controller, a microcontroller, or the like.

For example, as shown in FIG. 4a, on the surface of the cutting table 10, the first moving member 170 drives the laser processing head 132 to move along the predetermined processing path 11 according to the three-dimensional processing data 16. At the position Z1, the laser light 130 is precisely focused on the surface of the workpiece 15. At the position Z2, the workpiece 15 may have deformation such as convex deformation, concave deformation, tilting deformation or the like, so that the focus position of the laser light 130 is deviated. For example, when the workpiece 15 has the convex deformation, the focus position is located at, for example, a position that is 0.1 mm below the surface of the workpiece 15, so that the second moving member 171 can drive the laser processing head 132 to move 0.1 mm along a direction of the Z-axis away from the surface of the workpiece 15. When the workpiece 15 has the concave deformation, the focus position is located at, for example, a position that is 0.2 mm above the surface of the workpiece 15, so that the second moving member 171 can drive the laser processing head 132 to move 0.2 mm along the direction of the Z-axis toward the surface of the workpiece 15. The second moving member 171 can adjust the distance between the laser processing head 132 and the workpiece 15 in real-time and accurately, so that the laser light 130 can be accurately focused on the surface of the workpiece 15 and ensure that the laser processing head 132 and the workpiece 15 are precisely focused. The processing quality and effect of the workpiece 15 is ameliorated, and the processing accuracy of the workpiece 15 is improved.

It should be noted that, in order to ensure the quality of the laser processing, a precise focus position of the laser light 130 may be located at a center of the thickness of the workpiece 15. For example, when performing the cutting processing on the workpiece 15, it can be ensured that a width of a cutting gap at an upper surface and a width of a cutting gap at a lower surface of the workpiece 15 are consistent, so as to further improve the processing quality.

### Second embodiment

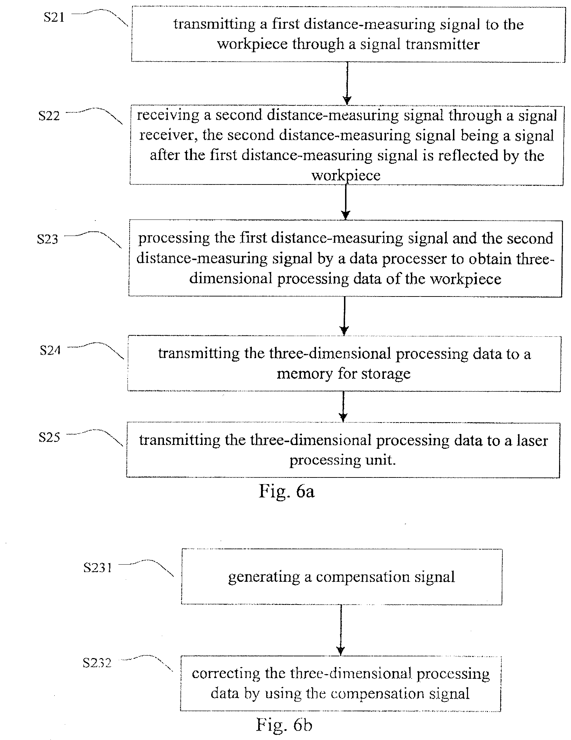

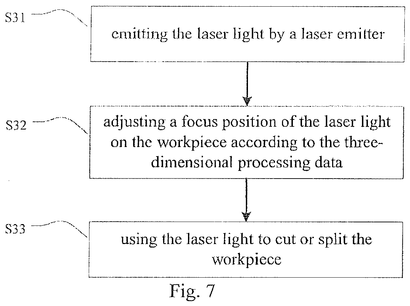

An embodiment of the present disclosure provides a laser processing method, FIG. 5 is a schematic flow chart of a laser processing method provided by an embodiment of the present disclosure, FIG. 6a is a schematic flow chart of a step S2 in FIG. 5, FIG. 6b is a schematic flow chart of a step S23 in FIG. 6a, and FIG. 7 is a schematic flow chart of a step S3 in FIG. 5.

For example, the laser processing method provided by the embodiment of the present disclosure may be applied to the laser processing device described in the first embodiment. As shown in FIG. 5, the laser processing method may comprise the following steps:

Step S1, placing a workpiece to be processed on a cutting table;

Step S2, performing distance measurement on the workpiece on a predetermined processing path to form three-dimensional processing data of the workpiece; and

Step S3, processing the workpiece by using laser light according to the three-dimensional processing data.

For example, before the laser processing, firstly, at each position on the predetermined processing path 11, a distance of the workpiece 15 in a Z-axis direction is measured by a distance-measuring unit 12 to form the three-dimensional processing data 16, and the three-dimensional processing data 16 is transmitted to a memory 26 for storage. During the laser processing, the memory 26 provides the three-dimensional processing data 16 to the laser processing unit 13, and the laser processing unit 13 adjusts the focus position of the laser light 130 according to the three-dimensional processing data 16 in real time and dynamically to accurately focus the laser light 130 on the workpiece 15. And then the workpiece 15 is processed, so that accuracy of the laser processing can be improved, the processing quality can be ameliorated, the rejection rate is reduced, and the product yield is improved. In another aspect, for example, the distance-measuring unit 12 and the laser processing unit 13 may be provided integrally or separately. In a case that the distance-measuring unit 12 and the laser processing unit 13 are provided separately, the distance-measuring unit 12 and the laser processing unit 13 can operate in the same area or different areas at the same time, so that the working efficiency of the laser processing can be improved. In yet another aspect, the three-dimensional processing data 16 is obtained by performing distance measurement on the workpiece 15 firstly, and then the laser processing is performed according to the three-dimensional processing data 16, so that the time for processing the three-dimensional processing data 16 can be saved during the laser processing, so as to improve the speed of the laser processing.

For example, the workpiece 15 may have deformation such as convex deformation, concave deformation, tilting deformation or the like due to a self-reason or an external reason, so as to cause that the surface of the workpiece 15 is not flat. The self-reason, for example, comprises warping and bending of the workpiece 15, defect of the workpiece 15 itself, and the like. The external reason, for example, comprises non-flatness of the surface of the cutting table 10, presence of abnormal substances on the surface of the cutting table 10 which causes the workpiece 15 to be padded, and the like. The laser processing method provided by the embodiment of the present disclosure can adjust the focus position of the laser light 130 in real time, so that the laser light 130 can be accurately focused on the workpiece 15, and therefore the adaptability to the deformation degree of the workpiece 15 can be enhanced, and on the other hand requirement on installation accuracy and flatness and a replacement frequency of the cutting table 10 can be reduced.

For example, as shown in FIG. 6a, forming the three-dimensional processing data of the workpiece may comprise the following steps:

Step 821, transmitting a first distance-measuring signal to the workpiece through a signal transmitter;

Step S22, receiving a second distance-measuring signal through a signal receiver, the second distance-measuring signal being a signal after the first distance-measuring signal is reflected by the workpiece;

Step S23, processing the first distance-measuring signal and the second distance-measuring signal by a data processer to obtain the three-dimensional processing data of the workpiece;

Step S24, transmitting the three-dimensional processing data to a memory for storage; and

Step S25, transmitting the three-dimensional processing data to a laser processing unit.

For example, on the surface of the cutting table 10, the distance-measuring unit 12 moves along the predetermined processing path 11 on the workpiece 15. At the position Z1, the distance-measuring unit 12 measures and obtains first distance information of the workpiece 15; as the position Z2, the distance-measuring unit 12 measures and obtains second distance information of the workpiece 15. For example, at the position Z2, the workpiece 15 is deformed, resulting in a distance difference between the first distance information and the second distance information. For example, when the workpiece 15 has convex deformation, the second distance information is smaller than the first distance information; when the wirkpiece 15 has concave deformation, the second distance information is larger than the first distance information. After the distance-measuring unit 12 measures a distance of the workpiece 15 in the Z-axis direction at each position on the predetermined processing path 11, the three-dimensional processing data 16 of the workpiece 15 can be obtained according to the distance-measuring results in conjunction with information of the predetermined processing path 11.

For example, the Z-axis coordinates of the three-dimensional processing data 16 may be referred to as the distances between the workpiece 15 and the distance-measuring unit 12, and the X-axis coordinates and the Y-axis coordinates of the three-dimensional processing data 16 may be referred to as the information of the predetermined processing path 11.

For example, the first distance-measuring signal 120 may be a laser signal, an ultrasonic signal, or the like, and accordingly, the second distance-measuring signal 121 may also be a laser signal, an ultrasonic signal, or the like.

It should be noted that types of the signal transmitter and the signal receiver, a type and a processing method of the data processer, a type of the memory, and the like may be the same as those in the first embodiment, and similar description will be omitted here.

For example, as shown in FIG. 6b, the step S23 may further comprise the following steps:

Step S231, generating a compensation signal;

Step S232, correcting the three-dimensional processing data by using the compensation signal.

For example, first position information of the laser processing unit 13 at a processing initial position and second position information of the distance-measuring unit 12 at the processing initial position may be measured, the first position information and the second position information are compared and the compensation signal are generated according to the difference therebetween. And then, the three-dimensional processing data 16 is corrected by using the compensation signal. The corrected three-dimensional processing data 16 may be transmitted to the memory 26 for storage, and finally may be provided to the laser processing unit 13.

For example, the first position information may be three-dimensional spatial coordinate information of the laser processing unit 13, and the second position information may be three-dimensional spatial coordinate information of the distance-measuring unit 12. The first position information may comprise distance information between the laser processing unit 13 and the workpiece 15 in the Z-axis direction, and the second position information may comprise distance information between the distance-measuring unit 12 and the workpiece 15 in the Z-axis direction. The first position information may further comprise coordinate information of the laser processing unit 13 in the X-axis direction and the Y-axis direction in space, and the second position information may further comprise coordinate information of the distance-measuring unit 12 in the X-axis direction and the Y-axis direction in space.

It should be noted that, in the step S23, three-dimensional spatial coordinates of the laser processing unit 13 and three-dimensional spatial coordinates of the distance-measuring unit 12 can be preset in advance, and the controller 18 may control the three-dimensional spatial coordinates of the laser processing unit 13 and the three-dimensional spatial coordinates of the distance-measuring unit 12 at the processing initial position to be the same, so that a compensation process for the spatial position difference between the laser processing unit 13 and the distance-measuring unit 12 can be omitted. For another example, spatial position difference between the laser processing unit 13 and the distance-measuring unit 12 at the processing initial position may also be measured in advance, and the spatial position difference may be transmitted to the data processer. When the data processer processes the first distance-measuring signal and the second distance-measuring signal, the spatial position difference between the laser processing unit 13 and the distance-measuring unit 12 is automatically compensated to obtain the compensated three-dimensional processing data.

For example, as shown in FIG. 7, processing the workpiece by using the laser light according to the three-dimensional processing data may comprise the following steps:

Step S31, emitting the laser light by a laser emitter;

Step S32, adjusting a focus position of the laser light on the workpiece according to the three-dimensional processing data; and

Step S33, using the laser light to cut or split the workpiece.

For example, on the surface of the cutting table 10, the first moving member 170 drives the laser processing head 132 to move along the predetermined processing path 11 according to the three-dimensional processing data 16. At the Z1 position, the laser light 130 is precisely focused on the surface of the workpiece 15, and the workpiece 15 is processed by using the laser light 130. When the laser processing head 132 is moved to the position Z2, the workpiece 15 may have deformation such as convex deformation, concave deformation, tilting deformation or the like at the position Z2, so that the focus position of the laser light 130 is deviated. For example, when the workpiece 15 has the convex deformation, the focus position is located at, for example, a position that is 0.1 mm below the surface of the workpiece 15, so that the second moving member 171 can drive the laser processing head 132 to move 0.1 mm along a direction of the Z-axis away from the surface of the workpiece 15. When the workpiece 15 has the concave deformation, the focus position is located at, for example, a position that is 0.2 mm above the surface of the workpiece 15, so that the second moving member 171 can drive the laser processing head 132 to move 0.2 mm along the direction of the Z-axis toward the surface of the workpiece 15. After adjusting the focus position of the laser light on the workpiece, the workpiece is processed by using the laser light 130. The second moving member 171 can adjust the distance between the laser processing head 132 and the workpiece 15 in real time and accurately, so that the laser light 130 can be accurately focused on the surface of the workpiece 15 and ensure that the laser processing head 132 and the workpiece 15 are precisely focused. The processing quality of the workpiece 15 is ameliorated, and the processing accuracy of the workpiece 15 is improved.

For example, processing the workpiece 15 by using the laser light 130 may comprise cutting or splitting the workpiece by using the laser light 130, so as to process the workpiece 15.

For example, a wavelength, a processing speed and power of the laser light 130 may be the same as those in the first embodiment, and details are not described here again.

For example, the laser processing method provided by the embodiment of the present disclosure may further comprise: blowing off residual abnormal substances by using high-speed airflow to prevent the residual abnormal substances from affecting subsequent processing of the workpiece.

It should be noted that, in order to ensure the quality of the laser processing, the precise focus position of the laser light 130 may be located at the center of the thickness of the workpiece 15. For example, when performing the cutting processing on the workpiece 15, it can be ensured that a width of a cutting gap at an upper surface and a width of a cutting gap at a lower surface of the workpiece 15 are consistent, so as to further improve the processing quality.

For the present disclosure, the following statements should be noted:
(1) the accompanying drawings involve only the structure(s) in connection with the embodiment(s) of the present disclosure, and other structure(s) can be referred to in common design(s); and
(2) in case of no conflict, the embodiments of the present disclosure and the features in the embodiment(s) can be combined with each other to obtain new embodiment(s).

What have been described above are only specific implementations of the present disclosure, the protection scope of the present disclosure is not limited thereto, and the protection scope of the present disclosure should be based on the protection scope of the claims.

## Claims

1. A laser processing device, comprising:
a cutting table, configured to load a workpiece to be processed;
a distance-measuring unit, configured to perform distance measurement on the workpiece along a predetermined processing path to obtain three-dimensional processing data of the workpiece; and
a laser processing unit, configured to process the workpiece according to the three-dimensional processing data.

2. The laser processing device according to claim 1, wherein the distance-measuring unit comprises:
a signal transmitter, configured to transmit a first distance-measuring signal to the workpiece;
a signal receiver, configured to receive a second distance-measuring signal, the second distance-measuring signal being a signal returned to the signal receiver after the first distance-measuring signal is reflected by the workpiece; and
a data proccsscr, configured to process the first distance-measuring signal and the second distance-measuring signal to obtain the three-dimensional processing data of the workpiece.

3. The laser processing device according to claim 2, wherein the first distance-measuring signal is a laser signal or an ultrasonic signal.

4. The laser processing device according to any one of claims 1 to 3, further comprising a memory,
wherein the memory is configured to receive and save the three-dimensional processing data from the distance-measuring unit, and the three-dimensional processing data is provided to the laser processing unit.

5. The laser processing device according to any one of claims 1 to 4, wherein the laser processing unit comprises: a laser emitter, an optical assembly and a laser processing head,
wherein the laser emitter is configured to emit laser light;
the optical assembly is configured to converge the laser light and provide the laser light to the laser processing head; and
the laser processing head is configured to process the workpiece based on the three-dimensional processing data.

6. The laser processing device according to claim 5, wherein the laser processing unit further comprises:
a first moving member, configured to drive the laser processing head to move within a surface of the cutting table; and
a second moving member, configured to drive the laser processing head to move in a direction perpendicular to the surface of the cutting table.

7. The laser processing device according to claim 5, wherein the laser processing head is configured to cut or split the workpiece.

8. The laser processing device according to any one of claims 1 to 7, further comprising a compensation device,
wherein the compensation device is configured to generate a compensation signal between the laser processing unit and the distance-measuring unit and to correct the three-dimensional processing data with the compensation signal.

9. A laser processing method, comprising:
placing a workpiece to be processed on a cutting table;
performing distance measurement on the workpiece along a predetermined processing path to form three-dimensional processing data of the workpiece; and
processing the workpiece by using laser light according to the three-dimensional processing data.

10. The laser processing method according to claim 9, wherein the forming the three-dimensional processing data of the workpiece comprises:
transmitting a first distance-measuring signal to the workpiece through a signal transmitter;
receiving a second distance-measuring signal through a signal receiver, the second distance-measuring signal being a signal after the first distance-measuring signal is reflected by the workpiece; and
processing the first distance-measuring signal and the second distance-measuring signal by a data processer to obtain the three-dimensional processing data of the workpiece.

11. The laser processing method according to claim 10, wherein a processing method of the data processer comprises a phase method, a spectral con-focal method, a trigonometric method or an interference method.

12. The laser processing method according to any one of claims 9 to 11, wherein the processing the workpiece by using the laser light comprises using the laser light to cut or split the workpiece so as to process the workpiece.

13. The laser processing method according to claim 12, wherein the processing the workpiece by using the laser light according to the three-dimensional processing data comprises:
emitting the laser light by a laser emitter;
adjusting a focus position of the laser light on the workpiece according to the three-dimensional processing data; and
using the laser light to cut or split the workpiece.

14. The laser processing method according to any one of claims 9 to 13, further comprising:
generating a compensation signal; and correcting the three-dimensional processing data by using the compensation signal.
